# FASCICULE DE BREVET EUROPEEN

(11) **EP 3 201 090 B1**
(45) Date de publication et mention de la délivrance du brevet: **13.12.2017**
(21) Numéro de dépôt: 16705070.7
(22) Date de dépôt: 09.02.2016
(51) Int. Cl.: B64G 1/00, B64G 1/26, B64G 1/40, B64G 1/42, B64G 1/24

(54) **SATELLITE À MOYENS DE PROPULSION ÉLECTRIQUES, PROCÉDÉ DE MISE À POSTE D'UN TEL SATELLITE ET PROCÉDÉ DE MAINTIEN À POSTE DUDIT SATELLITE**
SATELLIT MIT ELEKTRISCHER ANTRIEBSVORRICHTUNG, VERFAHREN ZUR PLATZIERUNG SOLCH EINES SATELLITEN IN EINER STATION UND VERFAHREN ZUM HALTEN DES BESAGTEN SATELLITEN IN SEINER STATION
SATELLITE COMPRISING ELECTRICAL PROPULSION MEANS, METHOD FOR PLACING SUCH A SATELLITE IN A STATION AND METHOD FOR KEEPING SAID SATELLITE IN ITS STATION

(30) Priorité: 10.02.2015 FR 1551034
(43) Date de publication de la demande: 09.08.2017
(73) Titulaire: Airbus Defence and Space SAS, 31402 Toulouse Cedex 4 (FR)
(72) Inventeur: DOUBRERE, Patrick, 31042 Toulouse (FR)
(74) Mandataire: Ipside
(86) Numéro de dépôt international: PCT/EP2016/052710
(87) Numéro de publication internationale: WO 2016/128389

(56) Documents cités:
- EP-A1- 2 666 723
- EP-A2- 2 660 154
- EP-A2- 2 727 844
- WO-A2-92/09479
- JOHN BROPHY: "The Dawn Ion Propulsion System", SPACE SCIENCE REVIEWS, KLUWER ACADEMIC PUBLISHERS, DO, vol. 163, no. 1 - 4, 16 novembre 2011 (2011-11-16), pages 251-261, XP019999175, ISSN: 1572-9672, DOI: 10.1007/S11214-011-9848-Y

## Description

La présente invention s'inscrit dans le domaine de la mise à poste et du maintien à poste d'un engin spatial, plus particulièrement d'un satellite, dans son orbite de mission autour d'un corps céleste. Plus particulièrement, l'invention concerne un satellite destiné à être mis à poste dans une orbite de mission autour d'un corps céleste, ainsi qu'un procédé de transfert d'un tel satellite d'une orbite initiale dans ladite orbite de mission, et un procédé de contrôle d'orbite et d'attitude d'un tel satellite dans ladite orbite de mission.

L'invention trouve une application particulièrement avantageuse, bien que nullement limitative, dans le cas de satellites de télécommunications destinés à être mis à poste en orbite géostationnaire (« Geostationnary Orbit » ou GEO) équipés de moyens de propulsion de type électriques.

Les engins spatiaux tels que les satellites artificiels sont destinés à être mis à poste en orbite autour d'un corps céleste, en particulier en orbite terrestre, notamment en orbite géostationnaire, afin d'y mener à bien leur mission, par exemple de télécommunication, d'observation, etc. Cette mise à poste est de manière habituelle réalisée en deux étapes. La première étape consiste à lancer le satellite dans l'espace, notamment depuis la surface terrestre, au moyen d'un véhicule spécifiquement dédié couramment nommé véhicule lanceur, et à l'injecter dans une orbite initiale, dite orbite d'injection. Dans la deuxième étape, le satellite est transféré depuis cette orbite d'injection jusqu'à son orbite de mission, également nommée orbite finale.

De manière connue, sur son orbite de mission, notamment en orbite terrestre, un satellite est soumis à de nombreuses perturbations. Ces perturbations tendent, d'une part, à déplacer le satellite par rapport à une position de consigne sur son orbite et, d'autre part, à modifier l'attitude dudit satellite par rapport à une attitude de consigne. Afin de maintenir le satellite sensiblement dans la position de consigne et dans l'attitude de consigne, il est nécessaire d'effectuer un contrôle d'orbite et un contrôle d'attitude dudit satellite.

Le contrôle d'orbite consiste à limiter les variations des paramètres orbitaux. Dans le cas d'un satellite en orbite GEO, tel qu'un satellite de télécommunications, le contrôle d'orbite revient à contrôler la position du satellite par rapport à la Terre, en termes d'inclinaison, longitude et excentricité, et est connu également sous le nom de maintien à poste du satellite (« station keeping » ou « S/K » dans la littérature anglo-saxonne).

Le contrôle d'orbite d'un satellite en orbite GEO est généralement réalisé au moyen de plusieurs manoeuvres de contrôle d'orbite au cours desquelles des propulseurs du satellite sont activés. Le contrôle d'orbite du satellite est effectué en ajustant les forces de poussée formées par lesdits propulseurs au cours des différentes manoeuvres de contrôle d'orbite. De manière conventionnelle, plusieurs manoeuvres de contrôle d'orbite sont effectuées :
- les manoeuvres Nord/Sud (N/S) permettent de contrôler l'inclinaison de l'orbite du satellite,
- les manoeuvres Est-Ouest (E/O) permettent de contrôler la longitude de l'orbite du satellite.

L'excentricité peut quant à elle être contrôlée au cours des manoeuvres E/O ou au cours des manoeuvres N/S.

On peut définir un repère satellite centré sur un centre de masse dudit satellite et comportant trois axes X, Y et Z : lorsque le satellite est à poste dans son orbite de mission, l'axe X est parallèle à un vecteur vitesse du satellite, l'axe Z est dirigé vers la Terre et l'axe Y est orthogonal aux axes X et Z. Dans le repère satellite, les manoeuvres N/S nécessitent d'avoir des forces de poussée suivant l'axe Y, tandis que les manoeuvres E/O nécessitent d'avoir des forces de poussée suivant l'axe X. On entend dans la présente description, par centre de masse du satellite, le centre de masse théorique du satellite ; son centre de masse réel peut varier légèrement au cours du temps en fonction de la quantité d'ergols dans les réservoirs, de la position / orientation des équipements de la charge utile, etc.

Les satellites sont classiquement équipés de moyens de propulsion aptes à réaliser d'une part leur transfert de l'orbite initiale à l'orbite de mission, et d'autre part leur maintien orbital dans cette orbite de mission. Ces moyens de propulsion peuvent être de type chimique. Récemment, la propulsion électrique, qui permet d'obtenir de meilleures performances en comparaison avec la propulsion chimique, a été utilisée en remplacement de la propulsion chimique pour réaliser le transfert et le maintien en orbite des satellites.

Les satellites à moyens de propulsion électriques proposés par l'art antérieur mettent en oeuvre des propulseurs électriques dont la direction de poussée est orientable par mécanisme. L'orientation des propulseurs permet notamment de contrôler la position de la direction de poussée par rapport au centre de masse du satellite, et de passer d'une configuration adaptée au transfert électrique, dans laquelle l'ensemble des propulseurs sont orientés selon le même axe dans le plan XZ (en général l'axe Z du repère satellite), à une configuration adaptée au maintien à poste.

A titre d'exemple, le document de brevet US-A-5,443,231 décrit un satellite comportant quatre propulseurs électriques, chacun étant monté sur un mécanisme permettant l'orientation de sa direction de poussée. Le transfert et le maintien à poste de ce satellite sont réalisés par mise en oeuvre simultanée ou séquentielle de deux propulseurs disposés en diagonale, aussi bien en mode nominal qu'en cas de panne. Un tel système manque cependant de robustesse, les cas dans lesquels deux propulseurs disposés d'un même côté du satellite deviennent défaillants étant particulièrement pénalisants pour la mission du satellite. En outre, les manoeuvres nécessaires au contrôle d'orbite et d'attitude d'un tel satellite peuvent s'avérer complexes à réaliser, notamment en ce qui concerne le contrôle d'excentricité, et elles sont en particulier susceptibles de former des moments pouvant modifier l'attitude du satellite, auxquels il est nécessaire de remédier.

Le document WO-A-92/09479 décrit un satellite comportant quatre propulseurs électriques pouvant être orientables par rapport au corps du satellite, et deux propulseurs électriques parallèles à l'axe Z du repère satellite.

La présente invention vise à proposer un satellite à moyens de propulsion électriques qui permette de réaliser plus simplement et efficacement un grand nombre de manoeuvres différentes de contrôle d'orbite et d'attitude du satellite.

Un objectif supplémentaire de l'invention est que ce satellite bénéficie d'un haut degré de robustesse aux cas de panne de propulseurs et/ou d'unités d'alimentation et de contrôle des propulseurs électriques, tout en présentant une masse et un coût limités.

L'invention vise également à ce que la phase de transfert de ce satellite de l'orbite initiale à l'orbite de mission puisse être réalisée de manière rapide.

Ainsi, il est proposé selon la présente invention un satellite destiné à être mis à poste dans une orbite de mission autour d'un corps céleste, notamment une orbite terrestre, en particulier une orbite géostationnaire, qui comporte, de manière classique en elle-même, une face dite Terre destinée à être disposée face à la Terre lorsque le satellite est à poste, et une face anti-Terre opposée, ledit satellite définissant un repère satellite centré sur un centre de masse du satellite et comportant trois axes X, Y et Z, l'axe Z étant destiné à être dirigé vers la Terre lorsque le satellite est à poste, l'axe X étant parallèle à un vecteur vitesse du satellite, et l'axe Y étant orthogonal aux axes X et Z. Ce satellite comporte :
- des moyens de propulsion comportant un premier propulseur électrique de direction de poussée orientable, et un deuxième propulseur électrique de direction de poussée orientable ;
- au moins deux unités d'alimentation d'un propulseur électrique,
- et un réseau d'interconnexion électrique reliant une première unité d'alimentation d'un propulseur électrique au premier propulseur électrique de direction de poussée orientable, et une deuxième unité d'alimentation d'un propulseur électrique au deuxième propulseur électrique de direction de poussée orientable.

Une unité d'alimentation, couramment nommée PPU, pour l'anglais « Power Processing Unit », est définie dans la présente description, de manière classique en elle-même, comme une unité électronique qui fournit une alimentation principale adaptée au fonctionnement et au contrôle d'un propulseur électrique.

Le premier propulseur électrique de direction de poussée orientable et le deuxième propulseur électrique de direction de poussée orientable sont aptes à être placés dans une configuration adaptée à leur permettre de réaliser ensemble le transfert d'orbite du satellite de l'orbite initiale à l'orbite de mission, c'est-à-dire aptes à être déplacés dans le repère satellite de sorte à orienter leurs directions de poussée de manière adéquate pour réaliser la phase de transfert du satellite de l'orbite initiale dans l'orbite de mission. En particulier, le premier propulseur électrique de direction de poussée orientable et le deuxième propulseur électrique de direction de poussée orientable sont aptes à être placés de sorte à orienter, simultanément, leur direction de poussée dans le plan XZ dans le repère satellite, leurs composantes suivant Z étant de même sens. Le premier propulseur électrique de direction de poussée orientable et le deuxième propulseur électrique de direction de poussée orientable peuvent notamment être aptes à être placés de sorte à orienter, simultanément, leur direction de poussée selon l'axe Z.

Le satellite selon l'invention est en outre tel que les moyens de propulsion comportent également un propulseur électrique d'orientation fixe par rapport au satellite, de ligne de poussée sensiblement alignée selon l'axe Z et passant par le centre de masse du satellite. On entend, par sensiblement alignée, le fait que la ligne de poussée peut aussi bien être parallèle à l'axe Z (ou se confondre avec cet axe), qu'être inclinée de quelques degrés par rapport à l'axe Z. Le réseau d'interconnexion électrique relie chacune de la première unité d'alimentation d'un propulseur électrique et de la deuxième unité d'alimentation d'un propulseur électrique au propulseur électrique d'orientation fixe, de telle sorte que chacune desdites unités d'alimentation est apte à alimenter soit le propulseur électrique de direction de poussée orientable associé, soit le propulseur électrique d'orientation fixe, en fonction des besoins particuliers de la mission.

Le propulseur électrique d'orientation fixe peut avantageusement être mis en oeuvre pour les manoeuvres de contrôle d'orbite et d'attitude du satellite, aussi bien en mode de fonctionnement nominal qu'en cas de panne d'un ou plusieurs propulseur(s) électrique(s) de direction de poussée orientable, et en particulier pour les manoeuvres de contrôle d'excentricité. Le moment appliqué sur le satellite par ce propulseur d'orientation fixe est avantageusement sensiblement nul tant que le centre de masse réel du satellite est proche de son centre de masse théorique.

En outre, en lien avec ce propulseur électrique d'orientation fixe, la configuration particulière du réseau d'interconnexion électrique du satellite selon l'invention, d'une part, assure avantageusement une redondance en cas de panne du propulseur électrique de direction de poussée orientable, et, d'autre part, permet qu'une plus grande diversité de manoeuvres puissent être réalisées par les moyens de propulsion du satellite, la puissance amenée par chaque unité d'alimentation d'un propulseur électrique pouvant être allouée soit au propulseur électrique de direction de poussée orientable qui lui est associé, soit au propulseur électrique d'orientation fixe, en fonction des besoins.

Ainsi, en cas de panne d'un propulseur électrique de direction de poussée orientable, l'unité d'alimentation associée à ce propulseur inopérant peut être utilisée pour alimenter le propulseur électrique d'orientation fixe. Le basculement de l'alimentation du propulseur inopérant vers le propulseur fixe est avantageusement facile et rapide à mettre en oeuvre.

En particulier, au cours de la phase de transfert du satellite de l'orbite initiale à l'orbite de mission, en cas de panne d'un propulseur électrique de direction de poussée orientable, le transfert peut avantageusement être poursuivi au moyen du propulseur électrique d'orientation fixe et du propulseur électrique de direction de poussée orientable restant opérationnel. A cet effet, la poussée de ce dernier est orientée sensiblement vers le centre de masse du satellite. La poussée totale résultante est alors supérieure ou égale à 90 % de la poussée en mode nominal, c'est-à-dire de la poussée réalisée simultanément par le premier propulseur électrique de direction de poussée orientable et par le deuxième propulseur électrique de direction de poussée orientable.

Au cours de la phase de contrôle d'orbite et d'attitude du satellite, le propulseur électrique d'orientation fixe peut également avantageusement être mis en oeuvre en remplacement d'un propulseur électrique de direction de poussée orientable, en cas de panne de ce dernier, pour assurer le contrôle d'excentricité

Ces résultats avantageux sont obtenus avec seulement trois propulseurs électriques au total, et deux unités d'alimentation, quand l'art antérieur prévoit, pour assurer le même degré de redondance, quatre propulseurs électriques de direction de poussée orientable, fonctionnant par paires.

Le premier propulseur électrique de direction de poussée orientable et le deuxième propulseur électrique de direction de poussée orientable sont avantageusement configurés de sorte à être aptes à exercer chacun une poussée selon l'axe Z dans le repère satellite, simultanément dans le même sens, de sorte à leur permettre d'assurer efficacement le transfert d'orbite du satellite de l'orbite initiale à l'orbite finale.

Le premier propulseur électrique de direction de poussée orientable et le deuxième propulseur électrique de direction de poussée orientable sont en outre préférentiellement configurés de sorte à être aptes à exercer chacun une poussée comportant, dans le repère satellite, une composante non nulle selon l'axe Z et/ou une composante non nulle suivant l'axe Y. La poussée exercée par ce premier propulseur et la poussée exercée par ce deuxième propulseur sont de préférence de sens opposés suivant l'axe Y.

Préférentiellement, le premier propulseur électrique de direction de poussée orientable et le deuxième propulseur électrique de direction de poussée orientable sont en outre disposés sur des faces distinctes du satellite, notamment disposés sur des faces opposées du satellite, par exemple l'un sur une face conventionnellement dite Nord du satellite, et l'autre sur une face conventionnellement dite Sud.

Selon des modes de réalisation particuliers, l'invention répond en outre aux caractéristiques suivantes, mises en oeuvre séparément ou en chacune de leurs combinaisons techniquement opérantes.

De manière générale, hormis les caractéristiques particulières décrites ci-avant et ci-après, notamment concernant ses moyens de propulsion, le satellite est classique en lui-même. Il peut notamment comporter des charges utiles, des moyens de collection d'énergie solaire, sous forme de panneaux solaires, en général déployables, des moyens de communication utilisant des antennes à réflecteurs déployables, et un module de service, assurant ses fonctions de base, et comprenant notamment des systèmes d'alimentation électrique, de contrôle et de navigation, de télémétrie et de communication, etc., ainsi que le câblage électrique associé. Il comporte également une réserve d'ergol suffisante pour assurer les manoeuvres de transfert d'orbite et de maintien orbital, ainsi le cas échéant que pour des manoeuvres de changement d'orbite pour son transfert, en fin de vie, dans son orbite cimetière. L'ensemble de ces éléments sont bien connus de l'homme du métier et ne seront pas décrits de manière détaillée dans la présente description.

Dans des modes de réalisation particuliers de l'invention, le propulseur électrique d'orientation fixe est disposé sur la face anti-Terre du satellite. Il ne constitue de ce fait notamment aucune entrave à la mise en place et au déploiement des instruments de la charge utile du satellite, qui sont classiquement installés sur la face Terre du satellite.

Dans des modes de réalisation particulièrement avantageux de l'invention, les propulseurs électriques des moyens de propulsion sont tous compatibles avec les mêmes unités d'alimentation d'un propulseur électrique. Ils sont de préférence identiques.

Ces propulseurs électriques peuvent par exemple être du type à effet Hall, bien connus de l'homme du métier, étant entendu qu'un tel exemple n'est aucunement limitatif de l'invention.

Dans des modes de réalisation particuliers de l'invention, le satellite comporte au moins trois unités d'alimentation d'un propulseur électrique et un réseau d'interconnexion électrique reliant chacune de ces unités d'alimentation d'un propulseur électrique à au moins un propulseur électrique des moyens de propulsion du satellite, de manière telle que puissent être mis en oeuvre simultanément le propulseur électrique d'orientation fixe et deux propulseurs électriques de direction de poussée orientable.

Cette troisième unité d'alimentation d'un propulseur électrique permet d'utiliser, pour la propulsion du satellite, les poussées simultanées à la fois de deux propulseurs électriques de direction de poussée orientable et du propulseur électrique d'orientation fixe. Pendant la phase de transfert du satellite de l'orbite initiale à l'orbite de mission, ceci permet de diminuer le temps nécessaire au transfert, et de minimiser ainsi notamment le temps d'exposition du satellite aux radiations des ceintures de Van Allen, ainsi que le coût de la mission. Ceci est avantageusement réalisé au moyen de propulseurs qui sont tous du même type, et utilisent le même carburant, donc avec un équipement du satellite de coût et de poids limités.

Cette diminution de la durée de la phase de transfert d'orbite est avantageusement obtenue par la mise en oeuvre de moyens matériels (le propulseur électrique d'orientation fixe) qui constituent également avantageusement une solution de redondance vis-à-vis d'un propulseur électrique de direction de poussée orientable.

Le satellite peut comporter un nombre d'unités d'alimentation d'un propulseur électrique supérieur à trois, par exemple égal à quatre ou cinq.

Dans des modes de réalisation particuliers de l'invention, visant à atteindre un des objectifs que s'est fixé la présente invention, qui est d'assurer un degré de robustesse élevé du satellite selon l'invention en cas de panne(s), les moyens de propulsion du satellite comportent un premier propulseur électrique de direction de poussée orientable additionnel disposé sur une même face du satellite que le premier propulseur électrique de direction de poussée orientable, et de préférence apte à être déplacé dans le repère satellite de sorte à orienter sa direction de poussée de manière adéquate pour réaliser la phase de transfert du satellite de l'orbite initiale dans l'orbite de mission.

Préférentiellement, les moyens de propulsion du satellite comportent en outre un deuxième propulseur électrique de direction de poussée orientable additionnel disposé sur une même face du satellite que le deuxième propulseur électrique de direction de poussée orientable, et de préférence apte à être déplacé dans le repère satellite de sorte à orienter sa direction de poussée de manière adéquate pour réaliser la phase de transfert du satellite de l'orbite initiale dans l'orbite de mission.

Ainsi, le satellite comporte avantageusement deux paires de propulseurs électriques de direction de poussée orientable, de préférence disposées respectivement sur deux faces distinctes du satellite, préférentiellement au niveau des faces dites respectivement Nord et Sud du satellite. Une première paire de propulseurs électriques de direction de poussée orientable comprend le premier propulseur électrique de direction de poussée orientable et le premier propulseur électrique de direction de poussée orientable additionnel, et une deuxième paire de propulseurs électriques de direction de poussée orientable comprend le deuxième propulseur électrique de direction de poussée orientable et le deuxième propulseur électrique de direction de poussée orientable additionnel.

Dans une telle configuration du satellite selon l'invention, tout à fait avantageuse en terme de redondance en cas de panne, dans des modes de réalisations préférés de l'invention, le satellite comporte une troisième unité d'alimentation d'un propulseur électrique et un réseau d'interconnexion électrique reliant cette troisième unité d'alimentation d'un propulseur électrique au premier propulseur électrique de direction de poussée orientable additionnel et au deuxième propulseur électrique de direction de poussée orientable additionnel.

Ainsi, le réseau d'interconnexion électrique relie préférentiellement :
- une première unité d'alimentation d'un propulseur électrique au premier propulseur électrique de direction de poussée orientable et au propulseur électrique d'orientation fixe,
- une deuxième unité d'alimentation d'un propulseur électrique au deuxième propulseur électrique de direction de poussée orientable et au propulseur électrique d'orientation fixe,
- et une troisième unité d'alimentation d'un propulseur électrique au premier propulseur électrique de direction de poussée orientable additionnel et au deuxième propulseur électrique de direction de poussée orientable additionnel.

Ainsi, avec un nombre de propulseurs électriques limité, et un nombre d'unités d'alimentation d'un propulseur électrique également limité, le satellite selon l'invention présente un degré élevé de redondance, en cas de panne d'un ou plusieurs propulseur(s) électrique(s) et/ou en cas de panne d'une ou plusieurs unité(s) d'alimentation d'un propulseur électrique.

Par rapport aux configurations proposées par l'art antérieur selon lesquelles les satellites sont équipés de quatre propulseurs électriques de direction de poussée orientable, et de deux unités d'alimentation d'un propulseur électrique, permettant le fonctionnement simultané de deux propulseurs électriques, la mise en oeuvre combinée conformément à des modes de réalisation particuliers de la présente invention, d'un propulseur électrique supplémentaire, d'orientation fixe par rapport au satellite et de ligne de poussée passant par le centre de masse du satellite et sensiblement alignée avec l'axe Z, et d'une troisième unité d'alimentation d'un propulseur électrique, permet à la fois de diminuer la durée de la phase de transfert d'orbite pour amener le satellite dans son orbite de mission (environ d'un tiers), et de fournir un degré élevé de robustesse, en cas de panne tant d'un propulseur électrique que d'une unité d'alimentation d'un propulseur électrique, et tant durant la phase de transfert que durant la phase de maintien orbital du satellite. Dans le cas d'une panne d'une unité d'alimentation, la durée de la phase de transfert est simplement ramenée au cas d'un fonctionnement à deux propulseurs électriques. Ceci est obtenu sans surcharge importante du système de puissance, du poids et du coût du satellite.

La mission du satellite est également robuste à une double panne, notamment à la panne simultanée d'un propulseur électrique de direction de poussée orientable et d'une unité d'alimentation d'un propulseur électrique, ou à la panne simultanée de deux propulseurs d'une même paire de propulseurs électriques de direction de poussée orientable. Dans ce dernier cas, la dégradation de la durée de mission, due à une moindre efficacité des manoeuvres, comme expliqué ci-après, n'est que légère.

Le satellite selon l'invention peut comporter une pluralité de propulseurs électriques d'orientation fixe par rapport au satellite, de ligne de poussée sensiblement alignée selon l'axe Z et passant sensiblement par le centre de masse du satellite, disposés sur une même face du satellite.

Dans des modes de réalisation particuliers de l'invention, le satellite comporte des moyens de déplacement dans le repère satellite de chacun des propulseurs électriques de direction de poussée orientable des moyens de propulsion du satellite.

Dans des modes de réalisation particuliers de l'invention, ces moyens de déplacement sont communs pour les propulseurs électriques de direction de poussée orientable disposés sur une même face du satellite.

Les moyens de déplacement dans le repère satellite de chacun des propulseurs électriques de direction de poussée orientable peuvent être formés par des mécanismes deux axes, sur chacun desquels est monté individuellement un propulseur électrique de direction de poussée orientable, chacun de ces mécanismes permettant l'orientation de la ligne de poussée du propulseur associé selon une direction choisie dans le repère satellite, en général sensiblement selon l'axe Z, pour la phase de transfert d'orbite, et au plus près de l'axe Y, en visant approximativement le centre de masse du satellite, pour le maintien orbital du satellite.

Dans des modes de réalisation particuliers de l'invention, les moyens de déplacement de chacun des propulseurs électriques de direction de poussée orientable comportent deux bras articulés portant chacun un propulseur électrique de direction de poussée orientable, et le cas échéant le propulseur électrique de direction de poussée orientable additionnel disposé sur la même face du satellite. Chacun de ces bras articulés comporte au moins trois articulations comportant chacune au moins un degré de liberté en rotation autour d'un axe de rotation.

La force de poussée de chaque propulseur, en particulier la direction de poussée et le point d'application de la force de poussée, est contrôlée en commandant les articulations du bras articulé.

Dans le cadre d'un tel mode de réalisation de l'invention, le propulseur électrique d'orientation fixe selon l'invention s'avère particulièrement utile en cas de panne simultanée des deux propulseurs électriques de direction de poussée orientable d'une même paire, portés par un même bras articulé, ou en cas de panne d'un bras articulé. En effet, pour les manoeuvres de maintien à poste, le propulseur fixe apporte alors la composante suivant l'axe Z manquante, et la mission peut se poursuivre avec un seul bras articulé. De même, pendant la phase de transfert, la poussée peut être effectuée en combinant la poussée du propulseur électrique d'orientation fixe et la poussée du propulseur électrique de direction de poussée orientable restant opérationnel sur le bras articulé. Dans ce cas, pour garder une poussée sans couple, la poussée du propulseur électrique de direction de poussée orientable porté par le bras articulé n'est plus alignée avec celle du propulseur électrique d'orientation fixe. Typiquement, l'angle entre les poussées est de moins de 50°, ce qui entraîne une perte d'efficacité de moins de 10 %.

Selon un autre aspect, la présente invention concerne un procédé de transfert d'un satellite selon l'invention, répondant à l'une ou plusieurs des caractéristiques ci-avant, d'une orbite initiale, notamment d'une orbite d'injection, dans une orbite de mission autour d'un corps céleste, notamment une orbite terrestre, et en particulier une orbite géostationnaire. Ce procédé comprend une étape de propulsion du satellite au moyen simultanément du propulseur électrique d'orientation fixe par rapport au satellite, de ligne de poussée alignée selon l'axe Z et passant par le centre de masse du satellite, et d'au moins un propulseur électrique de direction de poussée orientable.

Cette étape est notamment réalisée en cas de panne d'un propulseur de direction de poussée orientable, quand le transfert d'orbite ne peut être effectué en mode nominal, c'est-à-dire par poussée simultanée par deux propulseurs électrique de direction de poussée orientable.

Plus particulièrement encore, lorsque le satellite comporte au moins trois unités d'alimentation d'un propulseur électrique et un réseau d'interconnexion électrique reliant chacune de ces unités d'alimentation d'un propulseur électrique à au moins un propulseur électrique des moyens de propulsion de manière telle que puissent être mis en oeuvre simultanément le propulseur électrique d'orientation fixe et deux propulseurs électriques de direction de poussée orientable, le procédé de transfert comprend de préférence une étape de propulsion du satellite au moyen simultanément du propulseur électrique d'orientation fixe et d'au moins deux propulseurs électriques de direction de poussée orientable disposés sur des faces distinctes du satellite.

Dans des modes de mise en oeuvre particuliers de l'invention, correspondant à un mode de fonctionnement nominal, pour ladite étape de propulsion, la direction de poussée de chacun des propulseurs électriques mis en oeuvre est sensiblement alignée selon l'axe Z.

L'orbite de mission du satellite peut par exemple être une orbite terrestre, notamment l'orbite géostationnaire. L'orbite initiale est quant à elle alors préférentiellement une orbite terrestre basse. Le transfert du satellite de l'orbite initiale dans l'orbite de mission peut être effectué selon toute trajectoire classique en elle-même, simple ou sophistiquée.

Selon un autre aspect, la présente invention concerne un procédé de contrôle d'orbite et d'attitude d'un satellite selon l'invention, répondant à l'une ou plusieurs des caractéristiques ci-avant, dans une orbite de mission autour d'un corps céleste, notamment une orbite terrestre, en particulier une orbite géostationnaire. Ce procédé comprend une étape de propulsion du satellite par le propulseur électrique d'orientation fixe par rapport au satellite.

Cette étape peut être réalisée isolément, ou simultanément avec une étape de propulsion par un ou plusieurs propulseurs électriques de direction de poussée orientable. Elle permet notamment d'apporter du contrôle d'excentricité. Elle peut en outre être réalisée aussi bien en mode nominal, qu'en cas de panne.

Un autre aspect de l'invention réside dans un procédé de commande à distance d'un satellite selon l'invention, répondant à l'une ou plusieurs des caractéristiques ci-avant, pour la mise en oeuvre des étapes d'un procédé de transfert du satellite selon l'invention et/ou des étapes d'un procédé de contrôle d'orbite et d'attitude du satellite selon l'invention. Selon ce procédé, le satellite est commandé à distance par un dispositif de commande, en particulier au sol, des signaux de commande étant successivement déterminés et envoyés au satellite par ce dispositif de commande, pour la réalisation desdites étapes.

Un autre aspect de l'invention concerne un dispositif de commande qui comporte des moyens configurés pour commander, de préférence à distance, notamment depuis la surface terrestre, un satellite selon l'invention, répondant à l'une ou plusieurs des caractéristiques ci-avant, par transmission de signaux de commande successifs audit satellite, pour réaliser les étapes du procédé selon l'invention de transfert du satellite de l'orbite initiale dans l'orbite de mission, puis les étapes du procédé selon l'invention de contrôle d'orbite et d'attitude du satellite dans l'orbite de mission.

Ce dispositif de commande, notamment de commande au sol, est classique en lui-même et peut comporter une ou plusieurs antennes pour recevoir des signaux du satellite, et émettre des signaux d'instructions en direction de ce dernier. Il peut comprendre des ordinateurs et moyens de traitement et de stockage des données reçues du satellite. Ce dernier est notamment de préférence équipé d'un module de commande, comportant notamment un ou plusieurs processeurs, asservi à un module de communication coopérant avec le dispositif de commande.

La présente invention concerne également un produit programme d'ordinateur comportant un ensemble d'instructions de code de programme qui, lorsqu'elles sont exécutées par un processeur, mettent en oeuvre un procédé de transfert d'un satellite selon l'invention et/ou un procédé de contrôle d'orbite et d'attitude d'un satellite selon l'invention.

L'invention sera maintenant plus précisément décrite dans le cadre de modes de réalisation préférés, qui n'en sont nullement limitatifs, représentés sur les figures 1 à 6, dans lesquelles :
- la figure 1 représente de manière schématique un satellite selon un mode de réalisation particulier de l'invention ;
- la figure 2 représente de manière schématique un satellite selon un mode de réalisation différent de l'invention ;
- la figure 3 représente de manière schématique un satellite selon un mode de réalisation préféré de l'invention ;
- la figure 4 montre une vue partielle d'un satellite selon un mode de réalisation particulier de l'invention, illustrant le fonctionnement du propulseur électrique d'orientation fixe ;
- la figure 5a montre une vue partielle d'un satellite selon un mode de réalisation particulier de l'invention, en configuration de transfert d'orbite pour la mise à poste du satellite sur son orbite de mission ;
- la figure 5b montre une vue partielle du satellite de la figure 5a, en configuration de manoeuvres Nord/Sud ;
- et la figure 6 montre un diagramme illustrant le réseau d'interconnexion électrique d'un satellite selon un mode de réalisation particulier de l'invention.

L'invention sera décrite ci-après en référence à l'exemple particulier non limitatif d'un satellite 10 destiné à être mis à poste en orbite géostationnaire. Rien n'exclut cependant, suivant d'autres exemples, de considérer d'autres types d'engins spatiaux (navette spatiale, station orbitale, etc.), et/ou d'autres orbites terrestres, par exemple des orbites géosynchrones, des orbites moyennes (« Médium Earth Orbit » ou MEO), des orbites basses (« Low Earth Orbit » ou LEO), etc.

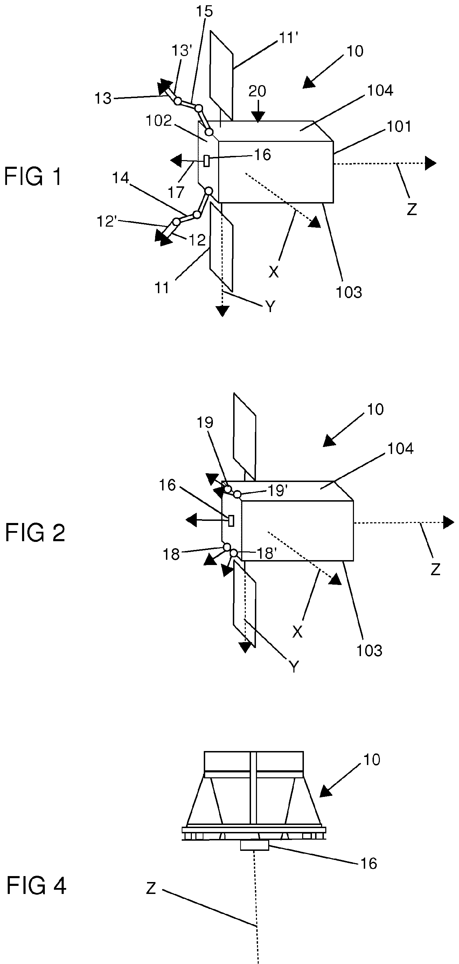

Un satellite 10 conforme à un mode de réalisation particulier de l'invention est montré de manière schématique sur la figure 1.

Ce satellite comporte, de manière classique en elle-même, une face dite Terre 101, destinée à être dirigée vers la Terre lorsque le satellite est à poste, et une face anti-Terre opposée 102. La face Terre 101 porte généralement les instruments de la charge utile du satellite. Le satellite 10 comporte également une face dite Sud 103 et une face dite Nord 104 opposée.

Le satellite 10 définit un repère satellite comportant trois axes X, Y et Z. Plus particulièrement, l'axe X est parallèle à un vecteur vitesse du satellite 10 en repère inertiel, l'axe Z est dirigé vers le centre de la Terre lorsque le satellite se trouve en orbite géostationnaire, et l'axe Y est orthogonal aux axes X et Z.

Tel qu'illustré par la figure 1, le satellite 10 comporte par exemple un corps 20, et deux générateurs solaires 11, 11' de part et d'autre du corps 20. Les deux générateurs solaires 11, 11' sont par exemple montés mobiles en rotation par rapport au corps 20 du satellite 10, autour d'un même axe de rotation. Un premier générateur solaire 11 se déploie depuis la face Sud 103 du satellite 10, et un deuxième générateur solaire 11' se déploie depuis sa face Nord 104.

Le satellite 10 comporte en outre au moins deux propulseurs électriques de direction de poussée orientable, portés pour l'un par la face Sud 103 du satellite 10, et pour le deuxième paire par sa face Nord 104. Le satellite 10 comporte de préférence au moins deux paires de propulseurs électriques de direction de poussée orientable, portées pour la première paire par la face Sud 103 du satellite 10, et pour la deuxième paire par sa face Nord 104. Ces propulseurs ne sont pas représentés sur la figure 1 mais la direction de poussée associée est illustrée en 12, 12' pour la paire de propulseurs portée par la face Sud 103 du satellite 10, et en 13, 13' pour la paire de propulseurs portée par sa face Nord 104. Dans chaque paire, un propulseur dit nominal est généralement mis en oeuvre en fonctionnement nominal, et un deuxième propulseur, dit propulseur additionnel, assure une redondance pour les cas de panne du propulseur nominal.

Chaque paire de propulseurs est portée par un bras articulé 14, 15, chacun de ces bras 14, 15 comportant trois articulations comportant chacune au moins un degré de liberté en rotation par rapport à un axe de rotation. Un exemple de réalisation de tels bras sera décrit de manière détaillée plus avant dans la présente description.

Le satellite 10 peut comporter un ou plusieurs propulseurs électriques de direction de poussée orientable additionnels.

Le satellite 10 comporte en outre un propulseur d'orientation fixe 16, dont la ligne de poussée, illustrée en 17 sur la figure 1, est alignée sensiblement selon l'axe Z, qui est l'axe destiné à être dirigé vers la Terre lorsque le satellite 10 est à poste sur l'orbite géostationnaire, et passe par le centre de masse du satellite 10 (non représenté sur cette figure).

Il peut comporter en outre un ou plusieurs propulseurs électriques d'orientation fixe par rapport au satellite additionnels.

L'ensemble des propulseurs électriques, qu'ils soient de direction de poussée orientable ou d'orientation fixe par rapport au satellite 10, sont de préférence, mais non obligatoirement, identiques, de sorte à pouvoir être alimentés et contrôlés par les mêmes unités d'alimentation électrique.

Ces propulseurs électriques peuvent par exemple être du type à effet Hall et présenter une puissance comprise entre 2,5 et 5 kW chacun.

Le satellite 10 comporte, de manière classique en elle-même, un réservoir d'ergols, non représenté sur les figures, adapté pour recevoir un volume d'ergols sous forme de gaz, par exemple de xénon, pour l'alimentation des propulseurs électriques.

Une variante de satellite 10 selon l'invention est montrée schématiquement sur la figure 2. Ce satellite 10 est identique à celui décrit ci-avant en référence à la figure 1, à la différence que les propulseurs électriques de direction de poussée orientable sont portés chacun par un bras articulé individuel 18, 18' pour les propulseurs portés par la face Sud 103 du satellite 10, et 19, 19' pour les propulseurs portés par la face Nord 104 du satellite 10, ces bras présentant chacun deux articulations comportant chacune au moins un degré de liberté par rapport à un axe de rotation.

Ces bras articulés 18, 18' et 19, 19' permettent chacun de contrôler l'orientation de la direction de poussée du propulseur électrique de direction de poussée orientable qui lui associé, en particulier dans le plan XZ, notamment selon l'axe Z, pour une phase de transfert du satellite 10 d'une orbite initiale à son orbite de mission géostationnaire, et sensiblement selon l'axe Y pour les manoeuvres de maintien à poste dans cette orbite.

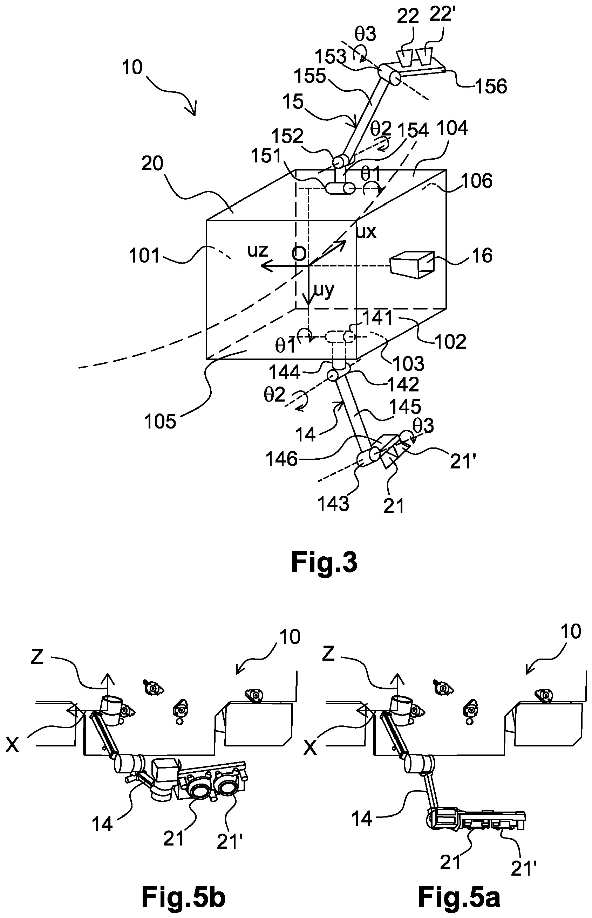

La figure 3 montre une représentation plus détaillée d'un satellite selon un mode de réalisation particulièrement avantageux de l'invention.

Pour les besoins de la description de cette figure, on associe au satellite 10 un repère satellite centré sur un centre de masse O du satellite 10 et comportant trois axes X, Y, Z. Plus particulièrement, l'axe X est parallèle à un vecteur vitesse du satellite 10 en repère inertiel, l'axe Z est dirigé vers le centre de la Terre, et l'axe Y est orthogonal aux axes X et Z. On associe à chacun des axes X, Y et Z du repère satellite des vecteurs unitaires respectivement ux, uy et uz. Le vecteur unitaire ux correspond au vecteur vitesse normalisé par la norme dudit vecteur vitesse, le vecteur unitaire uz est orienté du centre de masse O du satellite 10 vers le centre de la Terre, et le vecteur unitaire uy est orienté de telle sorte que l'ensemble (ux, uy, uz) constitue une base orthonormée directe du repère satellite.

Dans la suite de la description, on se place de manière non limitative dans le cas où le corps 20 du satellite 10 est sensiblement en forme de parallélépipède rectangle. Le corps 20 comporte ainsi six faces deux à deux parallèles.

On se place en outre de manière non limitative dans le cas où l'attitude du satellite 10 est contrôlée, pour les besoins de la mission dudit satellite 10, de sorte à être placé dans une attitude de consigne, dite « attitude de mission », dans laquelle :
- une face du corps 20 du satellite 10, dite face Terre 101, portant par exemple un instrument d'une charge utile dudit satellite 10, est dirigée vers la Terre et est sensiblement orthogonale à l'axe Z ; la face opposée à la face Terre, agencée alors du côté opposé à la Terre, est dite face anti-Terre 102 ;
- les deux faces opposées du corps 20 du satellite 10 sur lesquelles sont agencés les deux générateurs solaires 12, dites respectivement face Sud 103 et face Nord 104, sont sensiblement orthogonales à l'axe Y ;
- et les deux dernières faces opposées du corps 20 du satellite 10, respectivement 105 et 106, sont sensiblement orthogonales à l'axe X.

Le satellite 10 comporte également un ensemble d'actionneurs adaptés à contrôler l'orbite et l'attitude dudit satellite 10, ainsi qu'un dispositif de commande (non représenté sur les figures) desdits actionneurs.

Pour les besoins du contrôle d'attitude, le satellite 10 comporte de préférence un dispositif de stockage de moment cinétique.

Le satellite 10 comporte en outre des moyens de propulsion, comportant un ensemble de propulseurs électriques, plus particulièrement :
- un propulseur électrique 16 d'orientation fixe par rapport au satellite 10, disposé sur la face anti-Terre 102 du satellite 10, et dont la ligne de poussée est sensiblement alignée selon l'axe Z et passe par le centre de masse O du satellite ;
- et deux paires de propulseurs électriques de direction de poussée orientable : une première paire de propulseurs électriques 21, 21' est portée par la face Sud 103 du satellite 10, et une deuxième paire de propulseurs électriques 22, 22' est portée par la face Nord 104 du satellite.

Le point de fixation du propulseur d'orientation fixe 16 à la face anti-Terre 102 du satellite 10 correspond sensiblement à la projection orthogonale du centre de masse théorique du satellite 10 sur ladite face anti-Terre 102. Ainsi, le moment appliqué sur le satellite 10 par le propulseur d'orientation fixe 16 est sensiblement nul tant que le centre de masse O réel du satellite 10 est proche du centre de masse théorique. Il est à noter que le satellite 10 peut comporter, suivant d'autres exemples, plusieurs propulseurs 16 d'orientation fixe par rapport au satellite 10.

Le propulseur d'orientation fixe 16 peut être mis en oeuvre pour assurer le transfert du satellite 10 de l'orbite initiale dans son orbite de mission géostationnaire, ou, à poste, pour contrôler l'excentricité de l'orbite. Il peut être activé simultanément aux propulseurs électriques 21, 21', 22, 22', et/ou au cours de manoeuvres de contrôle d'excentricité dédiées, distinctes des manoeuvres de contrôle N/S et E/O de l'orbite.

Chaque paire de propulseurs électriques de direction de poussée orientable 21, 21' et 22, 22' est associée à des moyens de déplacement desdits propulseurs dans le repère satellite, adaptés à contrôler simultanément l'inclinaison et la longitude de l'orbite du satellite 10. Plus particulièrement, ces moyens de déplacement sont adaptés à :
- modifier des angles entre une direction de poussée de chaque propulseur et les axes respectivement X, Y du repère satellite,
- déplacer chaque propulseur, à direction de poussée constante dans le repère satellite, de sorte à former un moment d'axe quelconque dans un plan orthogonal à ladite direction de poussée (y compris un moment nul en alignant la direction de poussée avec le centre de masse O du satellite 10).

Le contrôle d'orbite du satellite 10 est réalisé, au niveau d'un dispositif de commande du satellite 10, en commandant les moyens de propulsion et les moyens de déplacement selon un plan de manoeuvre comportant des manoeuvres de contrôle d'orbite au cours desquelles les moyens de propulsion sont activés.

Avec de tels moyens de déplacement, on comprend qu'il est possible, au cours d'une même manoeuvre de contrôle d'orbite et avec un même propulseur, de contrôler la direction de poussée dudit propulseur de sorte à contrôler simultanément l'inclinaison (en ajustant la composante de la direction de poussée suivant l'axe Y) et la longitude (en ajustant la composante de la direction de poussée suivant l'axe X) de l'orbite.

Dans l'exemple illustré par la figure 3, les moyens de déplacement comportent deux bras articulés 14, 15, chaque bras articulé 14, 15 portant deux propulseurs électriques 21, 21' et 22, 22'.

Dans l'exemple non limitatif illustré par la figure 3, les bras articulés 14, 15 sont agencés sur respectivement la face Sud 103 et la face Nord 104 du corps 20 du satellite 10. Les bras articulés 14, 15 sont par exemple mis en oeuvre respectivement pour le contrôle Sud et le contrôle Nord de l'inclinaison de l'orbite du satellite 10, en activant alternativement soit un propulseur 21, 21' soit un propulseur 22, 22'.

Le bras articulé 14 est de préférence fixé à la face Sud 103 en un point fixe qui est décalé, suivant l'axe Z, par rapport à la projection orthogonale du centre de masse théorique O du satellite 10 sur ladite face Sud 103. De manière analogue, le bras articulé 15 est de préférence fixé à la face Nord 104 en un point fixe qui est décalé, suivant l'axe Z, par rapport à la projection orthogonale du centre de masse théorique O du satellite 10 sur ladite face Nord 104. Dans cette configuration, la force de poussée des propulseurs électriques de direction de poussée orientable respectivement 21, 21', et 22, 22', comporte en contrôle nord/sud une composante suivant l'axe Z sans former de moment. Une telle configuration n'est cependant nullement limitative de l'invention.

Chacun des deux bras articulés 14, 15 comporte au moins trois articulations respectivement 141, 142, 143 et 151, 152, 153. Chacune de ces articulations comporte au moins un degré de liberté en rotation autour d'un axe de rotation. Les articulations 141 et 142, et 151 et 152, sont reliées entre elles par une liaison respectivement 144 et 154, tandis que les articulations 142 et 143, et 152 et 153, sont reliées entre elles par une liaison respectivement 145 et 155.

Une platine 146, 156 s'étend depuis l'articulation terminale 143, 153 de chaque bras articulé 14, 15 et porte les propulseurs électriques 21, 21' et 22, 22'.

Chaque bras articulé 14, 15 offre trois degrés de liberté pour modifier, par rapport à la position de contrôle N/S, la direction de poussée et le point d'application de la force de poussée des propulseurs électriques qu'il porte. A cet effet, le dispositif de commande contrôle les angles de rotation des articulations 141, 151, 142, 152, et 143, 153, désignés respectivement par θ1, θ2 et θ3.

Les différents propulseurs électriques du satellite 10 selon l'invention peuvent être mis en oeuvre tant pour la phase de transfert du satellite d'une orbite initiale, en particulier une orbite d'injection dans laquelle il a été injecté par un véhicule lanceur, dans son orbite de mission géostationnaire, que pour le contrôle d'orbite et d'attitude du satellite à poste.

Pour l'ensemble de ces phases, le propulseur électrique 16 d'orientation fixe par rapport au satellite 10 présente une poussée de direction fixe, sensiblement alignée selon l'axe Z du satellite, comme indiqué de manière schématique sur la figure 4.

Ce propulseur électrique d'orientation fixe 16 peut être mis en oeuvre au cours de la phase de transfert d'orbite, en fonctionnement nominal, pour réduire le temps de transfert, ou en cas de panne d'un ou plusieurs propulseurs de direction de poussée orientable 21, 21', 22, 22'.

Il peut également être mis en oeuvre pour le contrôle d'orbite et d'attitude du satellite 10 à poste sur l'orbite géostationnaire, notamment pour les manoeuvres de contrôle d'excentricité, en fonctionnement nominal, ou en cas de panne, en particulier en cas de défaillance d'une paire de propulseurs électriques de direction de poussée orientable 21, 21' ou 22, 22' ou de l'un des bras articulés 14, 15. Le propulseur électrique d'orientation fixe 16 permet ainsi de compenser la poussée suivant l'axe Z créée par les propulseurs électriques de direction de poussée orientable qui restent opérationnels.

Les propulseurs électriques de direction de poussée orientable 21, 21', 22, 22' peuvent être mis en oeuvre tant pour la phase de transfert d'orbite que pour la phase de contrôle d'orbite et d'attitude du satellite 10. A cet effet, ils sont déplacés dans le repère satellite, de sorte à orienter leur direction de poussée de manière adéquate, par exemple selon l'axe Z, dans le même sens.

Les figures 5a et 5b illustrent des exemples de positionnement des propulseurs électriques de direction de poussée orientable 21, 21' portés par le bras articulé 14. Pour la phase de transfert d'orbite, ou pour certaines manoeuvres de contrôle d'orbite et d'attitude du satellite 10, comme illustré sur la figure 5a, les propulseurs électriques 21, 21' sont placés dans une configuration dans laquelle ils sont aptes à exercer une poussée selon l'axe Z. Pour certaines manoeuvres de contrôle d'orbite et d'attitude du satellite 10, comme illustré sur la figure 5b, les propulseurs électriques 21, 21' sont placés dans une configuration dans laquelle ils sont aptes à exercer une poussée dans une direction différente dans le repère satellite.

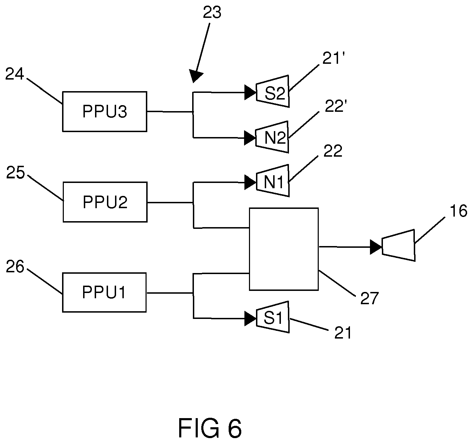

Le satellite 10 comporte en outre au moins deux unités d'alimentation électrique d'un propulseur électrique, dites PPU dans la suite de la présente description, qui sont classiques en elles-mêmes. De préférence, il comporte au moins trois PPU 24, 25, 26, et un réseau d'interconnexion électrique 23, dont un exemple de réalisation est illustré sur la figure 6, reliant chacune de ces PPU à un ou plusieurs propulseurs électriques du satellite 10.

Dans le mode de réalisation particulièrement avantageux illustré sur la figure 6, le réseau d'interconnexion électrique 23 relie entre eux les différents constituants suivants :
- une première unité d'alimentation d'un propulseur électrique 26, dite PPU1, est reliée d'une part au propulseur nominal 21 de la première paire de propulseurs électriques de direction de poussée orientable, dit S1, et d'autre part au propulseur électrique d'orientation fixe 16; un commutateur, non représenté sur la figure, permet à l'unité d'alimentation PPU1 26 d'alimenter, au choix, soit le propulseur électrique S1 21, soit le propulseur électrique d'orientation fixe 16 ;
- une deuxième unité d'alimentation d'un propulseur électrique 25, dite PPU2, est reliée d'une part au propulseur nominal 22 de la deuxième paire de propulseurs électriques de direction de poussée orientable, dit N1, et d'autre part au propulseur électrique d'orientation fixe 16; un commutateur, non représenté sur la figure, permet à l'unité d'alimentation PPU2 25 d'alimenter, au choix, soit le propulseur électrique N1 22, soit le propulseur électrique d'orientation fixe 16 ;
- et une troisième unité d'alimentation d'un propulseur électrique 24, dite PPU3, est reliée d'une part au propulseur additionnel 21' de la première paire de propulseurs électriques de direction de poussée orientable, dit S2, et d'autre part au propulseur additionnel 22' de la deuxième paire de propulseurs électriques de direction de poussée orientable, dit N2 ; un commutateur, non représenté sur la figure, permet à l'unité d'alimentation PPU3 24 d'alimenter, au choix, soit le propulseur électrique S2 21', soit le propulseur électrique N2 22'.

La liaison entre les PPU et les propulseurs électriques est réalisée par un câblage électrique classique en lui-même.

Une boite à relais 27, également classique en elle-même, est disposée en amont du propulseur électrique d'orientation fixe 16, sur les chemins d'alimentation depuis l'unité d'alimentation PPU1 26 et l'unité d'alimentation PPU2 25, pour permettre l'alimentation du propulseur électrique d'orientation fixe 16 soit depuis la première PPU1 26, soit depuis la deuxième PPU2 25, au choix.

Le satellite 10 répondant aux caractéristiques ci-dessus présente avantageusement un degré de robustesse particulièrement élevé, et peut s'adapter facilement à un grand nombre de pannes diverses, y compris des pannes doubles, si bien que son fonctionnement, et en particulier la durée de sa mission, n'est que peu ou pas impacté par les pannes, et ce pour une différence de masse et de coût par rapport aux satellites de l'art antérieur relativement faible. Cet avantage s'ajoute à celui de la diminution de la durée de la phase de transfert d'orbite, de l'orbite d'injection à l'orbite géostationnaire, qui permet de notamment minimiser le temps d'exposition du satellite 10 aux radiations des ceintures de Van Allen.

Pour la mise en oeuvre des phases de transfert d'orbite et des phases de contrôle d'orbite et d'attitude, le satellite 10 peut être commandé à distance par un dispositif de commande, notamment au sol, de manière classique en elle-même.

Ce dispositif de commande à distance est configuré pour piloter les différentes phases mises en oeuvre par le satellite 10. A cet effet, le dispositif de commande et le satellite 10 comportent chacun des moyens conventionnels de communication à distance.

Le dispositif de commande est adapté à déterminer des signaux de commande qui sont envoyés au satellite 10. Ces signaux de commande sont par exemple déterminés en fonction de signaux de mesure reçus du satellite 10, qui sont déterminés par différents capteurs (gyroscope, senseur stellaire, etc.) de ce dernier.

Le satellite 10 comporte par exemple au moins un processeur et au moins une mémoire électronique dans laquelle est mémorisé un produit programme d'ordinateur, sous la forme d'un ensemble d'instructions de code de programme à exécuter pour mettre en oeuvre les différentes étapes d'un procédé de commande du satellite 10.

Dans une variante, le dispositif de commande comporte également un ou des circuits logiques programmables, de type FPGA, PLD, etc., et/ou circuits intégrés spécialisés (ASIC) adaptés à mettre en oeuvre tout ou partie desdites étapes du procédé de commande. En d'autres termes, le dispositif de commande comporte un ensemble de moyens configurés de façon logicielle (produit programme d'ordinateur spécifique) et/ou matérielle (FPGA, PLD, ASIC, etc.) pour mettre en oeuvre les différentes étapes d'un procédé de transfert du satellite 10 de l'orbite d'injection dans l'orbite de mission, puis d'un procédé de contrôle d'orbite et d'attitude du satellite 10 dans l'orbite de mission.

## Revendications

1. Satellite (10) destiné à être mis à poste dans une orbite de mission autour d'un corps céleste, comportant une face dite Terre (101) destinée à être disposée face à la Terre lorsque ledit satellite (10) est à poste, et une face anti-Terre (102) opposée, ledit satellite (10) définissant un repère satellite centré sur un centre de masse du satellite et comportant trois axes X, Y et Z, l'axe Z étant destiné à être dirigé vers la Terre lorsque ledit satellite (10) est à poste, ledit satellite (10) comportant :
- des moyens de propulsion comportant un premier propulseur électrique de direction de poussée orientable (21), et un deuxième propulseur électrique de direction de poussée orientable (22),
lesdits moyens de propulsion comportant en outre un propulseur électrique (16) d'orientation fixe par rapport au satellite, de ligne de poussée alignée selon l'axe Z,
**caractérisé en ce que**
- la ligne de poussée du propulseur électrique d'orientation fixe (16) passe par le centre de masse du satellite, **en ce que** le satellite (10) comporte:
- au moins deux unités d'alimentation d'un propulseur électrique (25, 26) et un réseau d'interconnexion électrique (23) reliant une première unité d'alimentation d'un propulseur électrique (26) audit premier propulseur électrique de direction de poussée orientable (21), et une deuxième unité d'alimentation d'un propulseur électrique (25) audit deuxième propulseur électrique de direction de poussée orientable (22),
et **en ce que** ledit réseau d'interconnexion électrique (23) relie chacune de ladite première unité d'alimentation d'un propulseur électrique (26) et de ladite deuxième unité d'alimentation d'un propulseur électrique (25) audit propulseur électrique d'orientation fixe (16), de telle sorte que chacune desdites unités d'alimentation (25, 26) est apte à alimenter soit le propulseur électrique de direction de poussée orientable associé (22, 21), soit ledit propulseur électrique d'orientation fixe (16).

2. Satellite (10) selon la revendication 1, dans lequel le propulseur électrique (16) d'orientation fixe est disposé sur la face anti-Terre (102) du satellite (10).

3. Satellite (10) selon l'une quelconque des revendications 1 à 2, comportant au moins trois unités d'alimentation d'un propulseur électrique (24, 25, 26) et un réseau d'interconnexion électrique (23) reliant chacune desdites unités d'alimentation d'un propulseur électrique à au moins un propulseur électrique desdits moyens de propulsion de manière telle que puissent être mis en oeuvre simultanément ledit propulseur électrique d'orientation fixe (16) et deux propulseurs électriques de direction de poussée orientable.

4. Satellite (10) selon l'une quelconque des revendications 1 à 3, dans lequel les moyens de propulsion comportent un premier propulseur électrique de direction de poussée orientable additionnel (21') disposé sur une même face (103) dudit satellite que ledit premier propulseur électrique de direction de poussée orientable (21).

5. Satellite (10) selon la revendication 4, dans lequel les moyens de propulsion comportent un deuxième propulseur électrique de direction de poussée orientable additionnel (22') disposé sur une même face (104) dudit satellite que ledit deuxième propulseur électrique de direction de poussée orientable (22).

6. Satellite (10) selon la revendication 5, comportant une troisième unité d'alimentation d'un propulseur électrique (24) et un réseau d'interconnexion électrique reliant ladite troisième unité d'alimentation d'un propulseur électrique (24) audit premier propulseur électrique de direction de poussée orientable additionnel (21') et audit deuxième propulseur électrique de direction de poussée orientable additionnel (22').

7. Satellite (10) selon l'une quelconque des revendications 1 à 6, comportant une pluralité de propulseurs électriques (16) d'orientation fixe par rapport au satellite (10), de ligne de poussée alignée selon l'axe Z et passant sensiblement par le centre de masse du satellite, disposés sur une même face (102) dudit satellite (10).

8. Satellite (10) selon l'une quelconque des revendications 1 à 7, comportant des moyens de déplacement de chacun des propulseurs électriques de direction de poussée orientable (21, 21', 22, 22') des moyens de propulsion dans le repère satellite.

9. Satellite (10) selon la revendication 8, dans lequel les moyens de déplacement sont communs pour les propulseurs électriques de direction de poussée orientable disposés sur une même face dudit satellite.

10. Satellite (10) selon l'une quelconque des revendications 8 à 9, dans lequel les moyens de déplacement de chacun desdits propulseurs électriques de direction de poussée orientable (21, 21', 22, 22') comportent deux bras articulés (14, 15) portant chacun un propulseur électrique de direction de poussée orientable (21, 22), et le cas échéant le propulseur électrique de direction de poussée orientable disposé sur la même face dudit satellite (21', 22'), chacun desdits bras articulés (14, 15) comportant au moins trois articulations (141, 142, 143 et 151, 152, 153) comportant chacune au moins un degré de liberté en rotation autour d'un axe de rotation.

11. Satellite (10) selon l'une quelconque des revendications 1 à 10, dans lequel les propulseurs électriques (16, 21, 21', 22, 22') des moyens de propulsion sont tous compatibles avec les mêmes unités d'alimentation d'un propulseur électrique, et de préférence identiques.

12. Procédé de transfert d'un satellite (10) selon l'une quelconque des revendications 1 à 11 d'une orbite initiale dans une orbite de mission dudit satellite (10) autour d'un corps céleste, **caractérisé en ce qu'**il comprend une étape de propulsion dudit satellite (10) au moyen simultanément du propulseur électrique (16) d'orientation fixe par rapport au satellite (10) et d'au moins un propulseur électrique de direction de poussée orientable (21, 21', 22, 22').

13. Procédé de transfert selon la revendication 12, selon lequel, le satellite (10) comportant au moins trois unités d'alimentation d'un propulseur électrique (24, 25, 26) et un réseau d'interconnexion électrique (23) reliant chacune desdites unités d'alimentation d'un propulseur électrique à au moins un propulseur électrique desdits moyens de propulsion de manière telle que puissent être mis en oeuvre simultanément ledit propulseur électrique d'orientation fixe (16) et deux propulseurs électriques de direction de poussée orientable, ledit procédé de transfert comprend une étape de propulsion dudit satellite (10) au moyen simultanément dudit propulseur électrique d'orientation fixe (16), et d'au moins deux propulseurs électriques de direction de poussée orientable (21, 21', 22, 22') disposés sur des faces distinctes (103, 104) dudit satellite.

14. Procédé de contrôle d'orbite et d'attitude d'un satellite (10) selon l'une quelconque des revendications 1 à 11, dans une orbite de mission autour d'un corps céleste, **caractérisé en ce qu'**il comprend une étape de propulsion dudit satellite (10) par le propulseur électrique (16) d'orientation fixe par rapport audit satellite (10).

15. Procédé de commande à distance d'un satellite (10) pour la mise en oeuvre des étapes d'un procédé de transfert selon l'une quelconque des revendications 12 à 13 et/ou des étapes d'un procédé de contrôle d'orbite et d'attitude selon la revendication 14, selon lequel ledit satellite (10) est commandé à distance par un dispositif de commande, des signaux de commande étant successivement déterminés et envoyés audit satellite (10) par ledit dispositif de commande pour la réalisation desdites étapes.

16. Produit programme d'ordinateur **caractérisé en ce qu'**il comporte un ensemble d'instructions de code de programme qui, lorsqu'elles sont exécutées par un processeur, mettent en oeuvre un procédé de transfert d'un satellite (10) selon l'une quelconque des revendications 12 à 13 et/ou un procédé de contrôle d'orbite et d'attitude d'un satellite (10) selon la revendication 14.

## Patentansprüche

1. Satellit (10), der dazu bestimmt ist, in einer Einsatzumlaufbahn um einen Himmelskörper positioniert zu werden, der eine so genannte erdzugewandte Seite (101), die dazu bestimmt ist, der Erde gegenüber angeordnet zu sein, wenn der Satellit (10) in Position ist, und eine gegenüberliegende erdabgewandte Seite (102) aufweist, wobei der Satellit (10) ein Satelliten-Koordinatensystem definiert, das auf einen Massenmittelpunkt des Satelliten zentriert ist und drei Achsen X, Y und Z aufweist, wobei die Z-Achse dazu bestimmt ist, zur Erde gerichtet zu sein, wenn der Satellit (10) in Position ist, wobei der Satellit (10) aufweist:
- Antriebseinrichtungen, die ein erstes elektrisches Triebwerk mit ausrichtbarer Schubrichtung (21) und ein zweites elektrisches Triebwerk mit ausrichtbarer Schubrichtung (22) aufweisen, wobei die Antriebseinrichtungen außerdem ein elektrisches Triebwerk (16) mit fester Ausrichtung bezüglich des Satelliten mit einer gemäß der Z-Achse fluchtend ausgerichteten Schublinie aufweisen,
**dadurch gekennzeichnet, dass**
- die Schublinie des elektrischen Triebwerks mit fester Ausrichtung (16) durch den Massenmittelpunkt des Satelliten geht, dass der Satellit (10) aufweist:
- mindestens zwei Versorgungseinheiten eines elektrischen Triebwerks (25, 26) und ein elektrisches Verbindungsnetz (23), das eine erste Versorgungseinheit eines elektrischen Triebwerks (26) mit dem ersten elektrischen Triebwerk mit ausrichtbarer Schubrichtung (21) und eine zweite Versorgungseinheit eines elektrischen Triebwerks (25) mit dem zweiten elektrischen Triebwerk mit ausrichtbarer Schubrichtung (22) verbindet,
und dass das elektrische Verbindungsnetz (23) jede der ersten Versorgungseinheit eines elektrischen Triebwerks (26) und der zweiten Versorgungseinheit eines elektrischen Triebwerks (25) mit dem elektrischen Triebwerk mit fester Ausrichtung (16) verbindet, so dass jede der Versorgungseinheiten (25, 26) entweder das zugeordnete elektrische Triebwerk mit ausrichtbarer Schubrichtung (22, 21) oder das elektrische Triebwerk mit fester Ausrichtung (16) versorgen kann.

2. Satellit (10) nach Anspruch 1, wobei das elektrische Triebwerk (16) mit fester Ausrichtung auf der erdabgewandten Seite (102) des Satelliten (10) angeordnet ist.

3. Satellit (10) nach einem der Ansprüche 1 bis 2, der mindestens drei Versorgungseinheiten eines elektrischen Triebwerks (24, 25, 26) und ein elektrisches Verbindungsnetz (23) aufweist, das jede der Versorgungseinheiten eines elektrischen Triebwerks mit mindestens einem elektrischen Triebwerk der Antriebseinrichtungen derart verbindet, dass gleichzeitig das elektrische Triebwerk mit fester Ausrichtung (16) und zwei elektrische Triebwerke mit ausrichtbarer Schubrichtung in Betrieb genommen werden können.

4. Satellit (10) nach einem der Ansprüche 1 bis 3, wobei die Antriebseinrichtungen ein zusätzliches erstes elektrisches Triebwerk mit ausrichtbarer Schubrichtung (21') aufweisen, das auf der gleichen Seite (103) des Satelliten wie das erste elektrische Triebwerk mit ausrichtbarer Schubrichtung (21) angeordnet ist.

5. Satellit (10) nach Anspruch 4, wobei die Antriebseinrichtungen ein zusätzliches zweites elektrisches Triebwerk mit ausrichtbarer Schubrichtung (22') aufweisen, das auf der gleichen Seite (104) des Satelliten wie das zweite elektrische Triebwerk mit ausrichtbarer Schubrichtung (22) angeordnet ist.

6. Satellit (10) nach Anspruch 5, der eine dritte Versorgungseinheit eines elektrischen Triebwerks (24) und ein elektrisches Verbindungsnetz aufweist, das die dritte Versorgungseinheit eines elektrischen Triebwerks (24) mit dem zusätzlichen ersten elektrischen Triebwerk mit ausrichtbarer Schubrichtung (21') und mit dem zusätzlichen zweiten elektrischen Triebwerk mit ausrichtbarer Schubrichtung (22') verbindet.

7. Satellit (10) nach einem der Ansprüche 1 bis 6, der eine Vielzahl elektrischer Triebwerke (16) mit fester Ausrichtung bezüglich des Satelliten (10) aufweist, mit der Schublinie gemäß der Z-Achse fluchtend ausgerichtet und im Wesentlichen durch den Massenmittelpunkt des Satelliten verlaufend, die auf der gleichen Seite (102) des Satelliten (10) angeordnet sind.

8. Satellit (10) nach einem der Ansprüche 1 bis 7, der Einrichtungen zur Verschiebung jedes der elektrischen Triebwerke mit ausrichtbarer Schubrichtung (21, 21', 22, 22') der Antriebseinrichtungen im Satelliten-Koordinatensystem aufweist.

9. Satellit (10) nach Anspruch 8, wobei die Verschiebungseinrichtungen den auf der gleichen Seite des Satelliten angeordneten elektrischen Triebwerken mit ausrichtbarer Schubrichtung gemeinsam sind.

10. Satellit (10) nach einem der Ansprüche 8 bis 9, wobei die Verschiebungseinrichtungen jedes der elektrischen Triebwerke mit ausrichtbarer Schubrichtung (21, 21', 22, 22') zwei Gelenkarme (14, 15) aufweisen, die je ein elektrisches Triebwerk mit ausrichtbarer Schubrichtung (21, 22) und ggf. das auf der gleichen Seite des Satelliten (21', 22') angeordnete elektrische Triebwerk mit ausrichtbarer Schubrichtung tragen, wobei jeder der zwei Gelenkarme (14, 15) mindestens drei Gelenke (141, 142, 143 und 151, 152, 153) aufweist, die je mindestens einen Drehfreiheitsgrad um eine Drehachse aufweisen.

11. Satellit (10) nach einem der Ansprüche 1 bis 10, wobei die elektrischen Triebwerke (16, 21, 21', 22, 22') der Antriebseinrichtungen alle mit den gleichen Versorgungseinheiten eines elektrischen Triebwerks kompatibel und vorzugsweise gleich sind.

12. Verfahren zur Verlagerung eines Satelliten (10) nach einem der Ansprüche 1 bis 11 von einer ursprünglichen Umlaufbahn in eine Einsatzumlaufbahn des Satelliten (10) um einen Himmelskörper, **dadurch gekennzeichnet, dass** es einen Schritt des Antriebs des Satelliten (10) mittels gleichzeitig des elektrischen Triebwerks (16) mit fester Ausrichtung bezüglich des Satelliten (10) und mindestens eines elektrischen Triebwerks mit ausrichtbarer Schubrichtung (21, 21', 22, 22') enthält.

13. Verlagerungsverfahren nach Anspruch 12, gemäß dem, da der Satellit (10) mindestens drei Versorgungseinheiten eines elektrischen Triebwerks (24, 25, 26) und ein elektrisches Verbindungsnetz (23) aufweist, das jede der Versorgungseinheiten eines elektrischen Triebwerks mit mindestens einem elektrischen Triebwerk der Antriebseinrichtungen derart verbindet, dass das elektrische Triebwerk mit fester Ausrichtung (16) und zwei elektrische Triebwerke mit ausrichtbarer Schubrichtung gleichzeitig in Betrieb genommen werden können, das Verlagerungsverfahren einen Schritt des Antriebs des Satelliten (10) mittels gleichzeitig des elektrischen Triebwerks mit fester Ausrichtung (16) und mindestens zwei elektrischer Triebwerke mit ausrichtbarer Schubrichtung (21, 21', 22, 22') enthält, die auf unterschiedlichen Seiten (103, 104) des Satelliten angeordnet sind.

14. Verfahren zur Kontrolle der Umlaufbahn und Fluglage eines Satelliten (10) nach einem der Ansprüche 1 bis 11 in einer Einsatzumlaufbahn um einen Himmelskörper, **dadurch gekennzeichnet, dass** es einen Schritt des Antriebs des Satelliten (10) durch das elektrische Triebwerk (16) mit fester Ausrichtung bezüglich des Satelliten (10) enthält.

15. Verfahren zur Fernsteuerung eines Satelliten (10) zur Durchführung der Schritte eines Verlagerungsverfahrens nach einem der Ansprüche 12 bis 13 und/oder der Schritte eines Verfahrens zur Kontrolle der Umlaufbahn und Fluglage nach Anspruch 14, gemäß dem der Satellit (10) von einer Steuervorrichtung ferngesteuert wird, wobei Steuersignale nacheinander bestimmt und von der Steuervorrichtung zur Durchführung der Schritte an den Satelliten (10) geschickt werden.

16. Computerprogrammprodukt, **dadurch gekennzeichnet, dass** es eine Einheit von Programmcodeanweisungen aufweist, die, wenn sie von einem Prozessor ausgeführt werden, ein Verlagerungsverfahren eines Satelliten (10) nach einem der Ansprüche 12 bis 13 und/oder ein Verfahren zur Kontrolle der Umlaufbahn und der Fluglage eines Satelliten (10) nach Anspruch 14 durchführen.

## Claims

1. A satellite (10) intended to be stationed in a mission orbit around a celestial body, comprising a face called the Earth face (101) intended to be disposed facing the Earth when said satellite (10) is on station, and an opposite anti-Earth face (102), said satellite (10) defining a satellite frame of reference centered on a center of mass of the satellite and comprising three axes X, Y and Z, the axis Z being intended to be directed toward the Earth when said satellite (10) is on station, said satellite (10) comprising:
- propulsion means comprising a first electrical thruster (21) of orientable thrust direction and a second electrical thruster (22) of orientable thrust direction,
said propulsion means further comprising an electrical thruster (16) of fixed orientation relative to the satellite, having a thrust line aligned with the axis Z,
**characterized in that**
- the thrust line of the electrical thruster (16) of fixed orientation passes through the center of mass of the satellite (10), **in that** the satellite (10) comprises:
- at least two electrical-thruster power units (25, 26) and an electrically interconnecting network (23) connecting a first electrical-thruster power unit (26) to said first electrical thruster (21) of orientable thrust direction and a second electrical-thruster power unit (25) to said second electrical thruster (22) of orientable thrust direction,
and **in that** said electrically interconnecting network (23) connects each of said first electrical-thruster power unit (26) and said second electrical-thruster power unit (25) to said electrical thruster (16) of fixed orientation so that each of said power units (25, 26) is able to supply power either to the associated electrical thruster (22, 21) of orientable thrust direction or to said electrical thruster (16) of fixed orientation.

2. The satellite (10) as claimed in claim 1, wherein the electrical thruster (16) of fixed orientation is disposed on the anti-Earth face (102) of the satellite (10).

3. The satellite (10) as claimed in either of one of claims 1 and 2, comprising at least three electrical-thruster power units (24, 25, 26) and an electrically interconnecting network (23) connecting each of said electrical-thruster power units to at least one electrical thruster of said propulsion means so that said electrical thruster (16) of fixed orientation and two electrical thrusters of orientable thrust direction can be used simultaneously.

4. The satellite (10) as claimed in any one of claims 1 to 3, wherein the propulsion means comprise a first additional electrical thruster (21') of orientable thrust direction disposed on a same face (103) of said satellite as said first electrical thruster (21) of orientable thrust direction.

5. The satellite (10) as claimed in claim 4, wherein the propulsion means comprise a second additional electrical thruster (22') of orientable thrust direction disposed on a same face (104) of said satellite as said second electrical thruster (22) of orientable thrust direction.

6. The satellite (10) as claimed in claim 5, comprising a third electrical-thruster power unit (24) and an electrically interconnecting network connecting said third electrical-thruster power unit (24) to said first additional electrical thruster (21') of orientable thrust direction and to said second additional electrical thruster (22') of orientable thrust direction.

7. The satellite (10) as claimed in any one of claims 1 to 6, comprising a plurality of electrical thrusters (16) of fixed orientation relative to the satellite (10), with thrust lines aligned with the axis Z and passing substantially through the center of mass of the satellite, disposed on a same face (102) of said satellite (10).

8. The satellite (10) as claimed in any one of claims 1 to 7, comprising movement means for moving each of the electrical thrusters (21, 21', 22, 22') of orientable thrust direction of the propulsion means in the satellite frame of reference.

9. The satellite (10) as claimed in claim 8, wherein the movement means are common to the electrical thrusters of orientable thrust direction disposed on a same face of said satellite.

10. The satellite (10) as claimed in either one of claims 8 or 9, wherein the movement means for moving each of said electrical thrusters (21, 21', 22, 22') of orientable thrust direction comprise two articulated arms (14, 15) each carrying an electrical thruster (21, 22) of orientable thrust direction and where applicable the electrical thruster of orientable thrust direction disposed on the same face of said satellite (21', 22'), each of said articulated arms (14, 15) comprising at least three articulations (141, 142, 143 and 151, 152, 153) each having at least one degree of freedom in rotation about a rotation axis.

11. The satellite (10) as claimed in any one of claims 1 to 10, wherein the electrical thrusters (16, 21, 21', 22, 22') of the propulsion means are all compatible with the same electrical-thruster power units and preferably identical.

12. A method of transferring a satellite (10) as claimed in any one of claims 1 to 11 from an initial orbit into a mission orbit of said satellite (10) around a celestial body, **characterized in that** it comprises a step of propulsion of said satellite (10) by means simultaneously of the electrical thruster (16) of fixed orientation relative to the satellite (10) and at least one electrical thruster (21, 21', 22, 22') of orientable thrust direction.

13. The method as claimed in claim 12, wherein, the satellite (10) comprising at least three electrical-thruster power units (24, 25, 26) and an electrically interconnecting network (23) connecting each of said electrical-thruster power units to at least one electrical thruster of said propulsion means so that said electrical thruster (16) of fixed orientation and two electrical thrusters of orientable thrust direction can be used simultaneously, said method comprises a step of propulsion of said satellite (10) by means simultaneously of said electrical thruster (16) of fixed orientation and at least two electrical thrusters (21, 21', 22, 22') of orientable thrust direction disposed on different faces (103, 104) of said satellite.

14. A method of orbit and attitude control of a satellite (10) as claimed in any one of claims 1 to 11, in a mission orbit around a celestial body, characterized it comprises a step of propulsion of said satellite (10) by the electrical thruster (16) of fixed orientation relative to said satellite (10).

15. A method for remote control of a satellite (10) for the execution of the steps of a method of transferring a satellite (10) as claimed in either one of claims 12 or 13 and/or the steps of method of orbit and attitude control of a satellite (10) as claimed in claim 14, wherein said satellite (10) is remote-controlled by a control device, control signals being successively determined and sent to said satellite (10) by said control device to carry out said steps.

16. A computer program product **characterized in that** it comprises program code instructions which, when they are executed by a processor, execute a method of transferring a satellite (10) as claimed in any one of claims 12 to 13 and/or a method of orbit and attitude control of a satellite as claimed in claim 14.
